**Europäisches Patentamt**

**European Patent Office**

**Office européen des brevets**

(19)

(11) Veröffentlichungsnummer: **0 132 777**
**B1**

## (12) EUROPÄISCHE PATENTSCHRIFT

(45) Veröffentlichungstag der Patentschrift:
29.06.88

(51) Int. Cl.⁴: **F 16 L 59/14**

(21) Anmeldenummer: **84108466.8**

(22) Anmeldetag: **18.07.84**

(54) **Thermisch isolierte Rohrleitung.**

(30) Priorität: **20.07.83 DE 3326051**

(43) Veröffentlichungstag der Anmeldung:
**13.02.85 Patentblatt 85/7**

(45) Bekanntmachung des Hinweises auf die Patenterteilung:
**29.06.88 Patentblatt 88/26**

(84) Benannte Vertragsstaaten:
**BE CH DE FR GB LI LU NL SE**

(56) Entgegenhaltungen:
**DE-A-3 018 781**
**DE-U-7 429 253**
**DE-U-7 830 248**
**FR-A-1 235 266**
**GB-A-1 297 839**

(73) Patentinhaber: **STEAG Fernwärme GmbH,**
**Bismarckstrasse 54, D-4300 Essen 1 (DE)**

(72) Erfinder: **Schwarz, Dieter, Ing. grad.,**
**Lambertstrasse 8, D-4300 Essen 1 (DE)**

EP 0 132 777 B1

**Beschreibung**

Die Erfindung betrifft eine Rohrleitung, insbesondere Freileitung für Fernwärmenetze, mit einem innen liegenden Rohr für die Führung eines Mediums, einer das Rohr umgebenden thermischen Isolierung und einem Außenmantel mit Wasserablauföffnungen auf dem bei waagerechter Lage der Rohrleitung unteren Bereich, einer auf ihrer Außenseite mit in im wesentlichen gleichmäßiger Verteilung angeordneten Erhöhungen versehenen Zwischenschicht, die zwischen der Isolation und dem Außenmantel angeordnet ist, und bei der Raum für die Kondensation von Wasser am Außenmantel offengehalten ist, wobei die freien Enden der Erhöhungen an der Innenseite des Außenmantels anliegen.

Aus der Praxis ist eine solche Rohrleitung bekannt, bei der um ein metallisches Innenrohr zur thermischen Isolierung Mineralfasermatten auf Drahtgeflecht angeordnet sind. Um zwischen der außen liegenden Oberfläche der Mineralfasermatten und der Innenfläche des aus Blech gefertigten Außenmantels einen Ringspalt offenzuhalten, sind mit der Außenfläche des Innenrohrs in gleichmäßiger Umfangsverteilung mehrere sich in radialer Richtung durch die Isolierung erstreckende Abstandshalter vorgesehen. Mit den äußeren Enden sind über thermisch isolierende Zwischenstücke Abstandsringe verbunden, die den Blechmantel abstützen.

Der Blechmantel ist mittels Längs- und Rundnähten dauerelastisch abgedichtet. Der Ringspalt ist insbesondere bei intermittierend gefahrenen Fernwärmerohrleitungen vorgesehen, um ein sich an der Innenfläche des Außenmantels bildendes Kondensat in das Rohrtiefste ableiten zu können, ohne daß es in größerem Umfange in die thermische Isolierung eindringt.

Bei der bekannten Anordnung ist der Aufbau des Abstandshalters jedoch sehr material- und arbeitsaufwendig und darüber hinaus muß eine Abstützung auf dem Innenrohr erfolgen, um eine punktuelle Belastung der thermischen Isolierung zu vermeiden. Weiterhin besteht die Gefahr, daß bei größerer Kondensatbildung das Kondensat in der oberen Hälfte der Innenfläche des Außenmantels nicht an der Innenfläche abläuft, sondern in die thermische Isolierung eindringt.

Aus dem Dokument DE-U-7 429 253 ist eine Rohrleitung im Oberbegriff des Anspruches 1 genannten Art bekannt, bei der sich radial erstreckende Abstandshalter und eine feuchtigkeitsdurchlässige Zwischenschicht vorgesehen sind, wobei die Zwischenschicht auf ihrer Außenseite mit noppen- bzw. wabenförmige Erhöhungen versehen ist, die zusammen mit der Blechwand kleine Zwischenräume bilden. Das in den Zwischenräumen kondensierte Wasser kann durch Bohrungen auf der Unterseite abfließen. Bei der bekannten Rohrleitung sind für den Aufbau der Zwischenräume und für die Abstützung des Außenmantels gesonderte Bauteile erforderlich, wobei es von besonderem Nachteil ist, daß die radialen Abstandshalterungen durch die Isolierung hindurchgreifen müssen, wodurch ein Wärmeabfluß vom innen liegenden Rohr zum außen liegenden Mantel erfolgt.

Es ist die Aufgabe der vorliegenden Erfindung, eine Rohrleitung der im Oberbegriff des Anspruches 1 genannten Art zu schaffen, bei der auf einfache Weise eine Abstützung des Außenmantels und ein Aufbau des Kondensations- und Wasserabführungsraumes erfolgt.

Diese Aufgabe wird dadurch gelöst, daß der Außenmantel sich ausschließlich über die Zwischenschicht auf der Isolierung der Rohrleitung abstützt und daß die Zwischenschicht als eine geschlossene, feuchtigkeitsundurchlässige Kunststoffolie ausgebildet ist.

Durch das Umlegen einer geschlossenen Kunststofffolie mit entsprechender Festigkeit um die Isolierungsoberfläche wird eine gleichmäßige Belastung dieser Oberfläche erreicht und zugleich der erforderliche Freiraum zwischen Innenfläche des Außenmantels und der Isolierungsoberfläche aufgebaut, ohne daß gesonderte Abstandshalter erforderlich werden. Durch die Verwendung der geschlossenen Folie wird auch zugleich eine Diffusionssperre vom Freiraum in die thermische Isolierung erreicht. Vorzugsweise ist die Folie aus Polyäthylen hergestellt. Zur Ausbildung der Erhebungen ist es möglich, eine Folie mit einem entsprechenden Werkzeug, z. B. Noppenwalze, derart zu formen, daß zu einer Folienseite hin hohle Erhöhungen vorstehen. Es ist aber auch möglich, eine Folie zu fertigen, bei der die massiven Blöcke einstückig mit der Folie ausgebildet sind. In den Ansprüchen und in der Beschreibung wird unter dem Begriff "Folie" ein bahnartiges Material verstanden, das bei Aufbau der Rohrleitung zumindest eine gewisse Biegeelastizität aufweist, um in Anlage an den Außenmantel bzw. die Isolierung gebracht werden zu können. Unter die Erfindung fällt auch eine schalenartige Vorbereitung der Folie, d. h. eine Folie, die eine aufgeprägte Vorkrümmung beibehält.

Die Erfindung soll nun anhand der beigefügten Figuren näher beschrieben werden. Es zeigt:

Figur 1 eine Aufsicht auf die Unterseite eines Teilabschnitts der erfindungsgemäßen Rohrleitung, und

Figur 2 einen Querschnitt durch die Rohrleitung längs der Linie II-II in Figur 1.

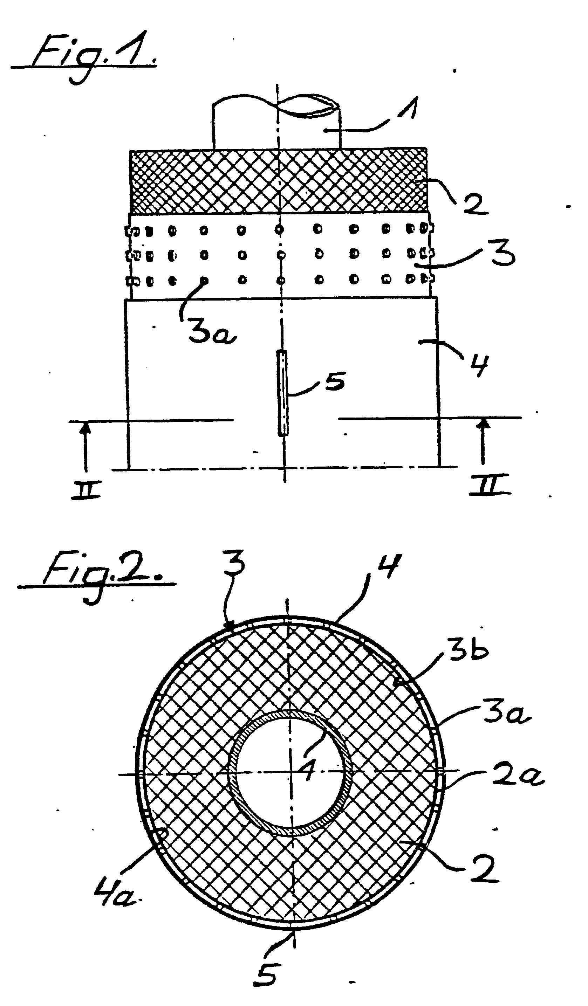

Ein als Glattrohr ausgebildetes Leitungsrohr 1 ist aus einem für den Anwendungszweck geeigneten Metall gefertigt. Um die Mantelfläche des Leitungsrohrs 1 ist eine thermische Isolierung 2 angeordnet, z. B. aus Mineralfasern, deren Dicke dem gewünschten Maß an thermischer Isolierung entspricht. Um die Oberfläche der Isolierung ist eine geprägte Noppenfolie 3 mit zylindrischen Erhöhungen 3a gelegt derart, daß die glatte Unterseite 3b der Folie 3 an der Oberfläche 2a der Isolierung anliegt. Durch die Prägung (eine andere vergleichbare Formungsmöglichkeit wäre z. B. Tiefziehen) wird erreicht, daß die Erhöhungen 3a innen hohl sind und die Wandstärke der Erhöhungen im wesentlichen der Schichtdicke der Folie entspricht. Den hohlen zylindrischen Erhöhungen auf der Außenseite der Folienbahn entsprechen Löcher in der glatten Unterseite der Folie 3. Die Folie ist aus Polyäthylen (PE) gefertigt.

Auf den im wesentlichen kreisförmigen Endflächen der zylindrischen Erhöhungen oder Noppen 3a liegt ein äußerer Blechmantel 4 mit seiner Innenfläche 4a auf. Infolge der gleichmäßigen Verteilung der Noppen auf der Folienbahn 3 wird eine gleichmäßige Abstützung des Blechmantels in Umfangs- und in Achsenrichtung erreicht und gleichzeitig ein Ringspalt offengehalten. Der Aufbau des Ringspalts wird durch einfaches Umlegen - ggf. unter Überlappung noppenfreier Teilbereiche der Folie - um die Isolierung 2 erreicht. Der Blechmantel 4 wird mittels Längs- und Rundnähten in an sich bekannter Weise ebenfalls unter Überlappung geschlossen. Auf der Unterseite des Blechmantels sind Wasserablauföffnungen 5 vorgesehen.

**Patentansprüche**

1. Rohrleitung, insbesondere Freileitung für Fernwärmenetze, mit einem innen liegenden Rohr für die Führung eines Mediums, einer das Rohr umgebenden thermischen Isolierung und einem Außenmantel mit Wasserablauföffnungen auf dem bei waagerechter Lage der Rohrleitung unteren Bereich, einer auf ihrer Außenseite mit in im wesentlichen gleichmäßiger Verteilung angeordneten Erhöhungen versehenen Zwischenschicht, die zwischen der Isolation und dem Außenmantel angeordnet ist, und bei der Raum für die Kondensation von Wasser am Außenmantel offengehalten ist, wobei die freien Enden der Erhöhungen an der Innenseite des Außenmantels anliegen, dadurch gekennzeichnet, daß der Außenmantel sich ausschließlich über die Zwischenschicht auf der Isolierung der Rohrleitung abstützt und daß die Zwischenschicht als eine geschlossene, feuchtigkeitsundurchlässige Kunststoffolie ausgebildet ist.

2. Rohrleitung nach Anspruch 1, dadurch gekennzeichnet, daß die Folie aus Polyäthylen hergestellt ist.

3. Rohrleitung nach Anspruch 1 oder 2, dadurch gekennzeichnet, daß die Erhebungen aus der Folie geformt sind.

4. Rohrleitung nach Anspruch 1 oder 2, dadurch gekennzeichnet, daß die Erhebungen als massive Blöcke einstückig mit der Folie gefertigt sind.

5. Rohrleitung nach einem der Ansprüche 1 bis 4, dadurch gekennzeichnet, daß das Innenrohr (1) und/oder der Außenmantel (4) aus einem metallischen Werkstoff gefertigt sind.

**Claims**

1. Pipeline, especially overhead line for distant-heating systems, with an inner pipe for conveying a medium, a thermal insulation surrounding the pipe, an outer sheath with water run-off orifices in the region at the bottom in the horizontal position of the pipeline, and an intermediate layer which is provided, on its outer face, with elevations arranged in an essentially uniform distribution and is located between the insulation and the outer sheath, and in which space is kept open for the condensation of water on the outer sheath, the free ends of the elevations resting against the inner face of the outer sheath, characterized in that the outer sheath is supported on the insulation of the pipeline solely via the intermediate layer, and in that the intermediate layer is designed as a continuous plastic film impermeable to moisture.

2. Pipeline according to Claim 1, characterized in that the film is produced from polyethylene.

3. Pipeline according to Claim 1 or 2, characterized in that the elevations are shaped out of the film.

4. Pipeline according to Claim 1 or 2, characterized in that the elevations are produced as solid blocks in one piece with the film.

5. Pipeline according to one of Claims 1 to 4, characterized in that the inner pipe (1) and/or the outer sheath (4) are produced from a metallic material.

**Revendications**

1. Conduite tubulaire, en particulier conduite à l'air libre pour réseaux de chauffage à distance, comprenant un tube intérieur pour le passage d'un fluide, une isolation thermique qui entoure le tube, et une enveloppe extérieure comportant des ouvertures d'évacuation d'eau dans la zone qui est située en bas lorsque la conduite tubulaire est horizontale, la conduite comprenant en outre, entre l'isolation et l'enveloppe extérieure, une couche intermédiaire qui présente sur sa face extérieure des bossages disposés selon une répartition sensiblement régulière et grâce à laquelle est maintenu ouvert, contre l'enveloppe extérieure, un espace pour la condensation de l'eau, les extrémités libres des bossages s'appuyant contre la face intérieure de l'enveloppe extérieure, caractérisée en ce que l'enveloppe extérieure s'appuie sur l'isolation de la conduite tubulaire exclusivement par l'intermédiaire de la couche intermédiaire; et en ce que la couche intermédiaire est constituée sous la forme d'une feuille plastique fermée, imperméable à l'humidité.

2. Conduite tubulaire selon la revendication 1, caractérisée en ce que la feuille est fabriquée en polyéthylène.

3. Conduite tubulaire selon la revendication 1 ou 2, caractérisée en ce que les bossages sont formés à partir de la feuille.

4. Conduite tubulaire selon la revendication 1 ou 2, caractérisée en ce que les bossages sont fabriqués d'une pièce avec la feuille sous forme de blocs massifs.

5. Conduite tubulaire selon l'une des revendications 1 à 4, caractérisée en ce que le tube intérieur (1) et/ou l'enveloppe extérieure (4) sont fabriqués en un matériau métallique.

# Fig.1.

# Fig.2.